# EUROPEAN PATENT APPLICATION

(11) **EP 1 320 236 A1**
(43) Date of publication of application: **18.06.2003**
(21) Application number: 01650146.2
(22) Date of filing: 12.12.2001
(51) Int. Cl.: H04L 29/06

(54) **Access control for network services for authenticating a user via separate link**

(71) Applicant: Markport Limited, Dublin 1 (IE)
(72) Inventor: McGee, Brendan, Mount Merrion, County Dublin (IE); Parsons, Julian, Henleaze, Bristol BS6 7TF (GB); Cavill, Simon, Hook, Hampshire RG27 GNT (GB)
(74) Representative: Weldon, Michael James

(57) **Abstract**

A user requiring access to a wireless LAN network using their WLAN access device performs the following steps. To obtain a session-specific and user specific access token the user sends a mobile originated short message from their mobile device, 1, addressed to a specific SMS ARTG access interface application provided as part of a WLAN access control system, 11, using a specific dialling code. The SMS ARTG access interface application on the WLAN access control system, 11, receives the short message from an SMSC, 2, using the normal delivery mechanisms provided by the SMSC platform. The dialling code is advertised nationally and locally by the WLAN network operator so that it is available to users when required.

## Description

### Introduction

The invention relates to control of access to network services in a data network such as a wireless local area network (WLAN) (e.g. IEEE 802.11b, IEEE 802.11a, HiperLAN/2, Bluetooth). It can also apply to other forms of data network such as public fixed line data networks (e.g. Internet Café access control) or corporate data networks (e.g. remote corporate user access control).

It is a feature of this invention that access to such data networks can be granted, and usage of the data networks can be charged or billed, for users who have not previously established an account relationship with the service provider. The invention allows such users to arrange pre-paid access, or to be billed in a post-paid manner for usage of the data network. This invention uses a mechanism to preauthorise access to a data network by checking user and account validity prior to an attempt to access the network. This provides enhanced security and fraud control to network operators or service providers wishing to provide network access services.

Over recent years the use of a mobile device such as a mobile telephone by a large percentage of the population has become commonplace. For corporate users the use of a mobile device has become ubiquitous. As such the mobile device is an ideal tool with which to communicate information to a user whether the information is voice information or data. The short message service provided by the GSM standard has become a widespread method for sending textual information from one user to another. Systems are being developed which allow short messages to be sent from a user to an application and vice versa. This invention uses the short message service to send authentication information between a user and a network to provide access control to data networks prior to establishment of a data session.

There has been significant growth in the use of pre-paid access to mobile network services in recent years. At present, pre-paid access is provided primarily for voice and SMS services using specialised pre-paid platforms that become part of the mobile operator network infrastructure. As mobile operators add packet data capabilities to their networks there is a need to support pre-paid access to data services delivered over the packet data system. Wireless LANs are starting to emerge as data networks that will benefit from pre-paid control based on metered usage or one-off fees. Prepaid control can be provided by mobile network operators who integrate wireless LAN access with their existing prepaid systems. It may also be provided by wireless internet service providers (WISPs) who provide their own prepaid platforms.

Key to support of WLANs is the ability to authenticate a subscriber, to ensure that they have a valid account, and to ensure that they are creditworthy. This invention provides an integrated method to provide authentication, check account validity and check credit worthiness prior to attempting to access a network such as a WLAN.

### Statements of Invention

According to the invention, there is provided a method of accessing a network service, the method comprising the steps of:-
the device transmitting a request for access to an application;
the application downloading an access token to the mobile device;
the mobile device subsequently transmitting the access token with a logon request to a service provider; and
an access controller allowing access upon verification of the access token.

In one embodiment, the access request is transmitted to an application residing on a pre-paid platform.

In another embodiment, the application authenticates the user and verifies credit worthiness of the user.

In a further embodiment, the application also downloads the access token to a network authentication server such as a RADIUS server.

In one embodiment, the network is a WLAN.

In another embodiment, the access token is specific to a user and a user session.

In a further embodiment, the access request is incorporated in an SMS message.

In one embodiment, the token is downloaded in an SMS message.

In another embodiment, the application retrieves the subscriber MSISDN from the messages to identify the subscriber.

In a further embodiment, the application stores the token in a subscriber record.

According to another aspect, the invention provides a method of a WLAN device accessing a network service using pre-login authentication, the method comprising the steps of:
the mobile device transmitting a request for access to an application residing on a pre-paid platform;
the application verifying the validity of the user, the account and the credit worthiness of the user;
the application downloading an access token to the mobile device and
the application downloading the same access token to a network RADIUS server; and
the WLAN device client subsequently transmitting the access token with a logon request to a RADIUS server and performing a mutual authentication.

According to another aspect, the invention provides a network application comprising means for processing an access token in a method as defined above.

### Detailed Description of the Invention

The invention will be more clearly understood from the following description of some embodiments thereof, given by way of example only with reference to the accompanying drawings in which:-
Fig. 1 is a network diagram illustrating access control functionality in an embodiment of the invention, in which information flows for requesting and receiving an access token are shown; and
Fig. 2 is a network diagram showing WLAN access connectivity to a prepaid platform illustrating how access and usage monitoring will take place; and
Fig. 3 indicates the Information stored per subscriber in the subscriber record database of the prepaid platform

A mobile operator or WISP can use account management capabilities of a pre-paid system to provide a system for pre-login authentication of users wishing to use a data network. As prepaid and postpaid services converge then this system will provide pre-login authentication whether the user is prepaid, postpaid or a corporate user.

The invention uses a short message bearer to request and receive a session and user specific token. The user then uses the token to access the wireless local area network. It combines the function of being able to request and receive a secure token with the function of checking the validity of the user to access the WLAN. The validity of the user is based upon the user having an account on the prepaid platform and the account being in credit or credit worthy. Thus, the user is authenticated and checked for credit worthiness prior to trying to access the WLAN. This is different to current practice where the user obtains access to the WLAN, is then authenticated by the network, and then checked for credit worthiness (if at all). As such this invention provides further degrees of fraud protection to the WLAN network operator or WISP.

When the user attempts access to the WLAN the access token, received via the short message bearer to the user mobile device, and the username is used to login to the network at the user WLAN access device (e.g. laptop, PDA, PC). The user is then authenticated again using standard authentication mechanisms that are linked to the pre-access authentication check, again providing enhanced security.

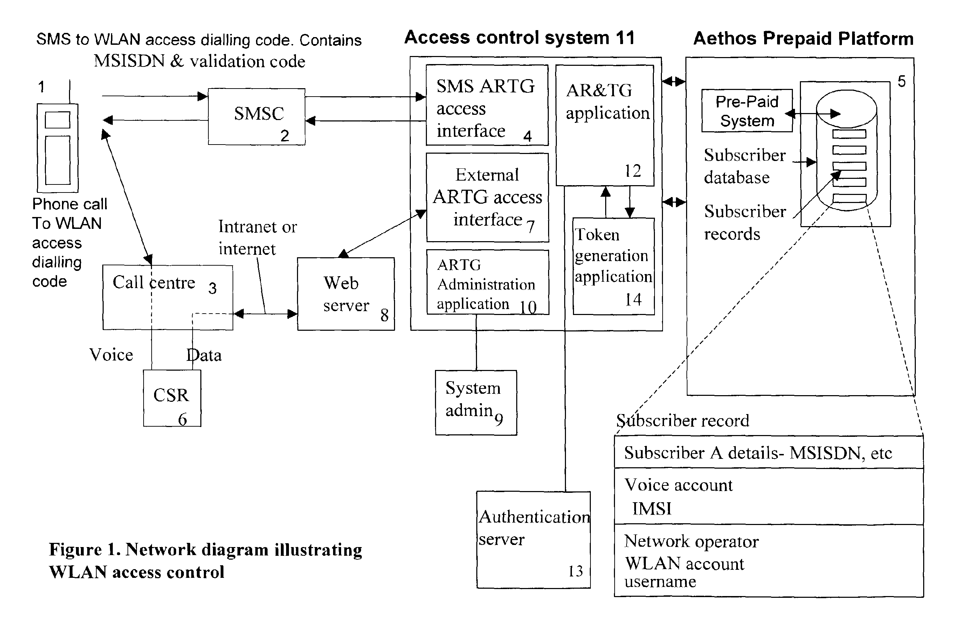

In more detail, and referring to Figure 1, a user requiring access to a wireless LAN network using their WLAN access device performs the following steps. To obtain a session-specific and user specific access token the user sends a mobile originated short message from their mobile device, 1, addressed to a specific SMS ARTG access interface application provided as part of a WLAN access control system, 11, using a specific dialling code. The SMS ARTG access interface application on the WLAN access control system, 11, receives the short message from an SMSC, 2, using the normal delivery mechanisms provided by the SMSC platform. The dialling code is advertised nationally and locally by the WLAN network operator so that it is available to users when required. The user can store this dialling code in the mobile device memory to ensure availability. The SMS may contain additional information such as validation code. Similarly, account owner information (e.g. may be used for a corporate WLAN access account) may be associated with the destination number.

The WLAN access control system, 11, communicates with a prepaid platform, 5 using the AR&TG application, 12. The SMS ARTG access interface application retrieves the MSISDN of the user from the short message and sends a query to the pre-paid platform. The MSISDN is used to check whether the user has an entry in the subscriber database of the prepaid platform. The user entry in the database would indicate that the user had previously set up an account for Wireless LAN access.

The response from the prepaid platform may indicate that a prepaid account has previously been set up, and is still valid. The account is considered valid if it exists and contains sufficient credit to allow the user to initiate a WLAN session. If a valid response is received, a token generation application, 14, is invoked to generate an access token in a secure manner.

The response from the prepaid platform may indicate that a postpaid account has previously been set up, and is still valid. The account is considered valid if it exists and the user has been checked for credit worthiness. If a valid response is received, a token generation application, 14, is invoked to generate an access token in a secure manner. If there is no previous account then the process for obtaining an account will be the same as detailed below.

The response from the pre-paid platform may indicate that there is no previous account. In this case, the access control system, 11, will send a short message back to the user via the SMSC. The short message contains the user MSISDN for addressing purposes and also text indicating that the user does not have an account for WLAN access. The text can indicate a premium rate number that can be called or messaged by the user to instantly set up a WLAN access account on the prepaid platform and add credit to the account. Once the user has undertaken this procedure and set up an account, then the user can start the procedure for obtaining an access token as previously described.

Once an access token has been obtained it is delivered to the user in the form of a short message originated by the access control system, 11. The term token is used to denote a subscriber and session-specific password. The token and other parameters are also transmitted to the authentication server, 13 used by the WLAN operator, e.g. a RADIUS server. The system is now configured to receive WLAN access requests from the subscriber.

An alternative method by which the subscriber may obtain the access token is also described in Figure 1. The subscriber initiates a voice call to a call centre operated by the WLAN network operator or WISP. This number may be advertised nationally and locally by the WLAN network operator as in the case of the SMS access number. The call is directed to a Customer Service Representative (CSR), 6, and at the same time, the call centre software may display the calling line identity on a screen for the CSR as well as the dialled number. The CSR may now obtain additional information from the caller (e.g. validation code). The CSR acts on behalf of the caller, connecting to the access control system via an intranet or the internet and a Web Server, 8. The CSR uses the External ARTG Access interface, 7, to submit a request for an access token. As before, the access control system communicates with the pre-paid platform to check whether a valid account exists for the subscriber. In the event no account has previously been set up, the CSR can set up an account for the subscriber and arrange for the account to be credited, e.g. by taking credit card details from the subscriber.

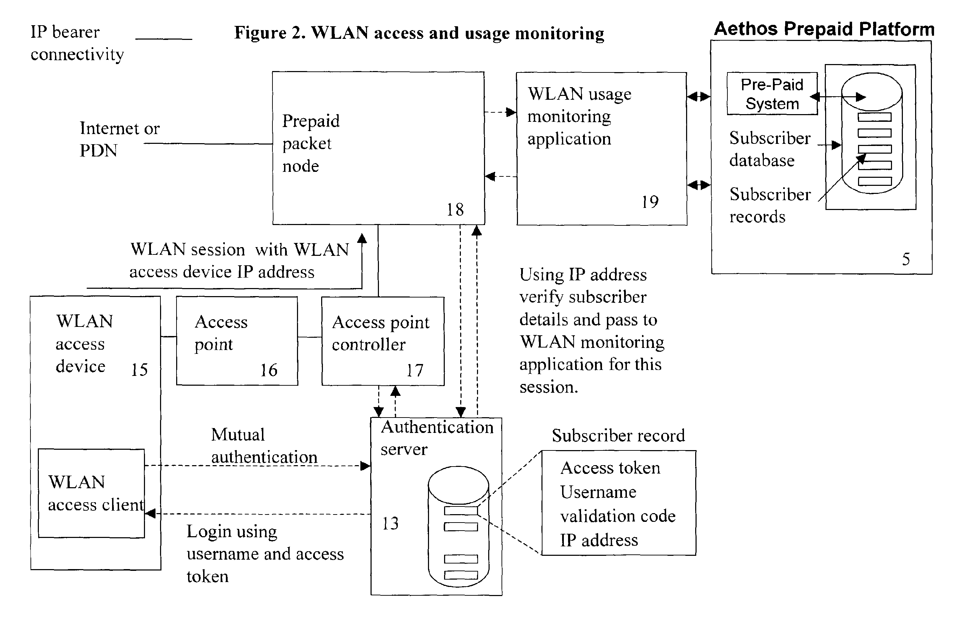

Referring to Figure 2, the user may now use the WLAN access device, 15, to connect to the data network via an access point, 16, and access point controller, 17. During the login process, the user is challenged to provide the access token previously transmitted via SMS. The user must enter the access token, which is checked by the authentication server in the network. Following successful authentication, the user is granted access to the data network, and usage of resources on the network can be controlled using the subscriber account created on the pre-paid platform.

A connection is established between the access point controller and a pre-paid packet node (PPN), 18. The PPN contains a WLAN usage monitoring application, 19, which interfaces with the prepaid platform to exchange information on the packet usage of the WLAN user. When a WLAN session initiation request is received by the PPN it checks the Authentication server to determine the validity of the session and identify the user account that is associated with the session. The PPN meters usage of the WLAN by the subscriber and passes this information to the monitoring application. The monitoring application processes the information and applies the charging model associated with the session, e.g. charge by volume, charge by duration, one-time fee, etc. The user account on the pre-paid platform is continually updated based on metered usage information and at termination of the session. If authorised usage is exceeded during the session, the PPN is alerted by the monitoring application and, if necessary, the user's session can be interrupted.

A more detailed description of each of the steps to be implemented by the invention is given below.

The access control system, 11 contains different applications to implement different aspects of the invention. The access control system is associated with the prepaid suite of platforms and functionality. It may reside on an existing node of the platform or may be supported by a discrete entity. The applications are defined in detail in the following sections.

### AR&TG application 12

This application is responsible for processing an access request from a WLAN user and then generating and managing access tokens in response to that request. This application uses information retrieved from the WLAN user using the SMS ARTG Access interface application 4 and External ARTG Access interface application 7.

### The AR&TG application 12 carries out the following functions:

### Account existence and credit check

On receipt of a request for WLAN access this function uses the received MSISDN of the mobile device to identify the subscriber in the subscriber database on the prepaid platform. If an account exists then the application uses the account owner information to identify a particular WLAN account associated with this subscriber. The application verifies whether the account is in credit or is credit worthy. The account may be a prepaid, postpaid or corporate WLAN access account.
If the account exists and is in credit then the application requests access token generation. If the account does not exist or is not credit worthy then this information is returned to the user, via SMS or the CSR, indicating the reason for failure to obtain an access token.

### Request access token generation

This function sends a request to the token generation application, 14, to request a user specific and session specific token. A secure token is generated using a cryptographically secure mechanism.

### Charge for access token generation

This function verifies on a per-subscriber basis whether a charge should be levied for token generation. This is designed to prevent misuse of token generation by WLAN users. For example, a WLAN user may request session tokens without using the tokens. If this happens on multiple occasions then the system administrator may choose to charge for access token generation or deny access to token generation.

### Store and distribute access tokens

This function stores the access token and the token lifetime in the subscriber record for this particular WLAN account on the prepaid platform. The MSISDN, the username, the validation code and the access token are stored in an encrypted format internally. This function can create, delete or modify a subscriber record on the authentication server, 13, using the username, the validation code and the access token. This function also initiates return of the access token to the WLAN user via SMS or CSR as appropriate.

### Manage access tokens

This function manages the lifetime of access tokens. As tokens are generated they are stored in the subscriber database on the prepaid platform along with an assigned lifetime. This function is responsible for deletion of the access token in the subscriber database and the authentication server upon expiry of the token lifetime . The token may also be deleted on termination of the WLAN user's session.

### SMS ARTG Access Interface 4

This application retrieves subscriber information from a WLAN user initiated SMS requesting WLAN access. The WLAN user may request an access token for a prepaid, postpaid or corporate account.

The SMS ARTG access interface application carries out the following functions:

### SMS message retrieval

This function retrieves a SMS from the SMSC.

### SMS message information retrieval

This function retrieves the MSISDN, the validation code and the dialled number from the SMS. The MSISDN is retrieved from the originating address of the SMS. The validation code is retrieved from the text of the SMS. The dialled number is retrieved from the destination address of the SMS. Other information that may be included in the SMS text can also be retrieved, e.g. account ownership information.

### Account owner retrieval

This function uses the destination address of the SMS to identify the WLAN account owner. The account owner is required to identify for which subscriber account the access token is to be granted.
The account owner database holds information of all the dialling codes used for access code requests. It stores the account owner against each dialling code so that the account owner can be identified.

### External ARTG access interface application. 7

This application retrieves subscriber information from forms submitted by a CSR for prepaid, postpaid or corporate access token requests.

### AR&TG administration application

This application allows a system administrator to manage (create, delete, modify) information related to postpaid, prepaid and corporate access request addresses. The AR&TG administration application performs the following functions:

### Management of the Access Request Code (ARCS database

The Access Request Code database stores details of all access request codes assigned by the network operator. The ARC database will contain as a minimum the following fields:
- Access request code
- Account owner

### Additional Details Relevant to the Invention

The access control system is deployed in the network as a highly available and scaleable node. It can be deployed as a multi-node cluster, in which individual nodes may operate either in a load-sharing mode, or in a standby mode as required by the network operator. In load-sharing mode, each node in the cluster operates as a live system. If one node should fail, live traffic is routed via the remaining nodes in the cluster, i.e. a node failure results in some loss of capacity but no loss of service. This cluster arrangement provides a highly scaleable access control system. In standby mode, one of the nodes in the cluster is configured as a standby node. If one node should fail, the traffic for the failed node is re-routed automatically to the standby node, which replaces the failed node in the cluster, i.e. a node failure results in no loss of capacity.

In a minimum configuration, the access control system is deployed as a dual node cluster, operating in either load-sharing or standby mode.

Availability and scalability issues are addressed also for real-time monitoring of a subscriber's usage of data network resources during a session. The PPN and monitoring application can be deployed as a single entity or as separate elements in the invention. In either case, a multi-node cluster arrangement can be used to ensure reliability of service and scalability.

The invention is intended to support a wide range of usage scenarios for access to network services including WLAN, public fixed line data networks or corporate data networks. Some WLAN usage scenarios are described here as illustrations of the invention in use to support access to network services, although the invention is not limited to the described scenarios.

The invention will support all of the defined scenarios. For each request the subscriber information is processed dependent on the type of request, i.e. SMS ARTG access interface processes SMS-based requests and External ARTG access interface processes voice call based requests. Both these mechanisms can be used by prepaid, postpaid or corporate account holders.

### Scenario: Request for WLAN access

A WLAN user has a prepaid account set-up and has credited the account with sufficient credit to allow access. The WLAN user sends an SMS to a network operator defined address specifically assigned for requesting WLAN access tokens. The message is received by the SMS ARTG access interface application via the network SMSC.

The SMS ARTG access interface application carries out the following functions:
- SMS message retrieval
- SMS message information retrieval

The AR&TG application carries out the following functions:
- Account existence check and credit check
- Request access token generation
- Charge for access token generation
- Store and distribute access token
- Manage access tokens
- Access token delivery

The WLAN user receives an SMS to the SMS Inbox of their mobile device containing an access token. The access token is user and session specific and can only be used to provide WLAN access for a specific WLAN access account of the WLAN user.

This scenario is the same for postpaid and corporate subscribers who use the SMS mechanism for access request.

### Scenario: WLAN access using the WLAN access token

Please refer to figure 2.
The WLAN user uses the WLAN access device (laptop, PDA, etc) to initiate access to the WLAN data network using the access token. The WLAN client on the access device associates with the access point, 16, and requests a username and password from the WLAN user. The WLAN user manually inputs their username and password. The username must match the username previously submitted in the request for an access token. The password is formed from a concatenation of the access token and the user validation code (PIN) also submitted in the request for an access token. This method provides enhanced security as the access token can only be used by the WLAN user who knows the username and the validation code.

The request for access is passed to the access point controller, 17, which initiates a session with the authentication server using an authentication, authorisation and accounting protocol such as RADIUS. The authentication server and the WLAN client perform a mutual authentication procedure through the access point.

The Authentication server contains a record with matching username and password that was created by the access control system when the access token was generated in response to the subscriber's request for access.

This WLAN access method is independent of the type of mutual authentication mechanism used and will therefore work with any industry standard mechanisms. In other embodiments of the invention, the authentication mechanisms may be based on alternative technologies such as public key infrastructure, or one time sessions keys, etc.

The Authentication server is part of the network operator's infrastructure and can be accessed using an access point controller belonging to the network operator. Where agreements are in place with the WLAN service provider then the Authentication server can also be accessed from an access point controller belonging to a 3rd party service provider.

Once mutual authentication has taken place then specific WLAN authentication procedures can take place using support for mechanisms such as, but not limited to, IETF EAP (Extensible Authentication procedure) and IEEE 802.1X.

### Scenario: Metering and Charging for WLAN usage

It is possible for a network operator access point to offer service both to their own users and to users registered with another service provider. In this latter case, roaming agreements will have to be in place between the two service providers.

At login to the WLAN service the system must determine which WLAN account is to be used for the current session, i.e. a network operator account or a separate service provider account. It is possible and likely that a WLAN user will have both types of account, or more than one service provider account. This determination can be based on a combination of information elements submitted during the access request procedure.

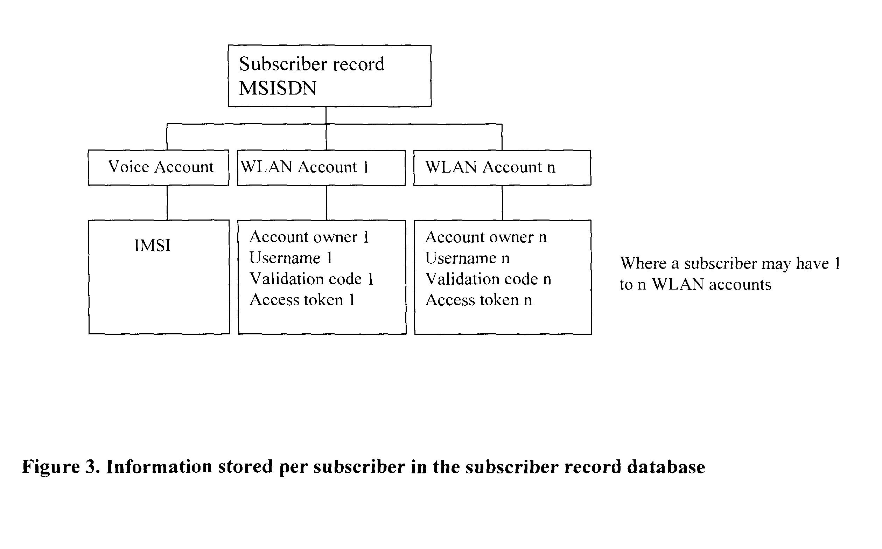

Referring to Figure 3, it can be seen that a subscriber record may have a number of accounts associated with it, e.g. a voice account used for pre-paid voice calling, as well as one or more WLAN access accounts. Each WLAN access account may have a different owner, e.g. service provider or corporate owner. The specific access number used for the access request (SMS or voice call) may be used to identify the WLAN access account ownership for the request. A new WLAN access account may be attached to the subscriber's record if it does not already exist. The username, validation code and access token are all added to the record during the access request procedure. When the subscriber accesses the WLAN, the account to be used can be determined by matching the username with each WLAN access account in the subscriber's record.

Figure 2 shows how WLAN usage is monitored using the pre-paid platform via a prepaid packet node (PPN), 18. The PPN contains a WLAN usage monitoring application, 19, which interfaces with the prepaid platform to exchange information on the packet usage of the WLAN user. When a WLAN session initiation request is received by the PPN it checks the Authentication server to determine the validity of the session and to obtain the username associated with the IP address allocated for the session. The PPN passes the username and access token to the prepaid platform, which uses this information to obtain account and subscriber information. Usage of the WLAN by the subscriber is continually metered by the PPN and this information is passed to the monitoring application, which applies the charging model associated with the user account, e.g. charge by volume, charge by duration, one-time fee, etc. The monitoring application continually updates the user account on the pre-paid platform based on the metered usage information, and when the session is terminated. When the threshold of authorised usage for the subscriber is reached, the PPN is alerted and can interrupt the subscriber session if necessary.

### Scenario: Prepaid corporate accounting

When corporate users access the corporate WLAN account they use their corporate username with a session specific token and a user specific PIN. When the session is initiated the prepaid platform identifies the corporate account from the username and access token information. The credit control mechanisms can be applied to this corporate account to prevent unauthorised usage beyond a certain defined limit. This mechanism may be used by corporate telecommunications managers to control individual corporate usage of WLAN access.

### Scenario: Postpaid corporate accounting

At the termination of a session the prepaid platform generates a CDR that stores the session usage information. At a predetermined time the CDRs may be rated by the rating application in the prepaid platform and all corporate usage for this corporate will be added to the overall corporate account.

### Methods of revenue apportionment and settlement

Settlement of revenue apportionment between a network operator and WLAN service provider or hotspot owner can take place on a real time basis or can be settled on a periodic basis. The prepaid platform creates accounts for all service providers with which the network operator has a commercial agreement. When WLAN access usage takes place the usage is recorded by call detail records (CDR's) on the prepaid platform. The prepaid platform identifies the WLAN access user, the service provider or hotspot owner, the tariff details, and the WLAN usage in the CDR record. The CDRs may be stored in the prepaid platform until such time as they are polled for rating by the rating application on the prepaid platform. The rating application, calculates the amount of revenue to be apportioned to the service provider based on information in the CDR. The prepaid platform credits this amount to the service providers WLAN access account along with the amounts from other CDRs generated for this service provider. The prepaid platform generates settlement records on a periodic basis dependent upon the agreement between the network operator and service provider. The settlement records are used to agree financial settlement between the two companies.

The invention is not limited to the embodiments described but may be varied in construction and detail.

## Claims

1. A method of accessing a network service, the method comprising the steps of:-
the device transmitting a request for access to an application;
the application downloading an access token to the mobile device;
the mobile device subsequently transmitting the access token with a logon request to a service provider; and
an access controller allowing access upon verification of the access token.

2. A method as claimed in claim 1, wherein the access request is transmitted to an application residing on a pre-paid platform.

3. A method as claimed in claims 1 or 2, wherein the application authenticates the user and verifies credit worthiness of the user.

4. A method as claimed in any preceding claim, wherein the application also downloads the access token to a network authentication server such as a RADIUS server.

5. A method as claimed in any preceding claim, wherein the network is a WLAN.

6. A method as claimed in any preceding claim, where in the access token is specific to a user and a user session.

7. A method as claimed in any preceding claim, wherein the access request is incorporated in an SMS message.

8. A method as claimed in any preceding claim, wherein the token is downloaded in an SMS message.

9. A method as claimed in any preceding claim, wherein the application retrieves the subscriber MSISDN from the messages to identify the subscriber.

10. A method as claimed in any preceding claim, wherein the application stores the token in a subscriber record.

11. A method of a WLAN device accessing a network service using pre-login authentication, the method comprising the steps of:
the mobile device transmitting a request for access to an application residing on a pre-paid platform;
the application verifying the validity of the user, the account and the credit worthiness of the user;
the application downloading an access token to the mobile device and the application downloading the same access token to a network RADIUS server; and
the WLAN device client subsequently transmitting the access token with a logon request to a RADIUS server and performing a mutual authentication.

12. A network application comprising means for processing an access token in a method as claimed in any preceding claim.
